(19) **Europäisches Patentamt / European Patent Office / Office européen des brevets**

(11) **EP 1 253 115 B1**

(12) **FASCICULE DE BREVET EUROPEEN**

(45) Date de publication et mention
de la délivrance du brevet:
**07.03.2012 Bulletin 2012/10**

(51) Int Cl.:
***C02F 1/78*** (2006.01)

(21) Numéro de dépôt: **02291665.4**

(22) Date de dépôt: **04.06.1999**

(54) **Procédé de minéralisation des polluants organiques de l'eau par l'ozonation catalytique**

Verfahren zur Mineralisierung organischer Schadstoffe in Wasser durch katalytische Ozonierung

Catalytic ozonation process for the mineralisation of organic pollutants in water

(84) Etats contractants désignés:
**AT BE CH DE DK ES FI FR GB GR IE IT LI NL PT SE**

(30) Priorité: **18.06.1998 FR 9807714**

(43) Date de publication de la demande:
**30.10.2002 Bulletin 2002/44**

(62) Numéro(s) de document de la (des) demande(s)
initiale(s) en application de l'article 76 CBE:
**99923671.4 / 1 094 988**

(73) Titulaire: **ONDEO DEGREMONT**
**92500 Rueil-Malmaison (FR)**

(72) Inventeurs:
• **Baig, Sylvie**
**78360 Montesson (FR)**
• **Legay, Cécile**
**31240 Saint-Jean (FR)**
• **Molinier, Jacques**
**31120 Goyrans (FR)**
• **Escude, Sandrine**
**66270 Le Soler (FR)**
• **Lucchese, Yolande**
**31810 Clermont Lefort (FR)**
• **Dartiguenave, Michèle**
**31520 Ramonville (FR)**

(74) Mandataire: **Peaucelle, Chantal et al**
**Cabinet Armengaud Aîné**
**3, Avenue Bugeaud**
**75116 Paris (FR)**

(56) Documents cités:
**EP-A- 0 913 193**

**Description**

La présente invention concerne l'oxydation avancée des polluants organiques de l'eau. Elle concerne plus particulièrement un procédé d'ozonation catalytique conduisant à une minéralisation substantielle de la matière organique présente en phase aqueuse.

La matière organique se définit comme l'ensemble des composés oxydables globalement quantifiés de façon classique par la Demande Chimique en Oxygène (DCO) et la Demande Biologique en Oxygène (DBO), un autre paramètre de plus en plus utilisé étant le Carbone Organique Total (COT).

De par la simplicité de leur mise en oeuvre et leur coût relativement faible, les procédés biologiques sont les techniques d'épuration les plus utilisées pour traiter la pollution organique. Toutefois, l'activité des micro-organismes impliqués se limite à l'élimination des composés organiques biodégradables et peut être inhibée en présence de substances toxiques. Le traitement des polluants organiques non biodégradables requiert une étape d'oxydation chimique.

Le procédé le plus anciennement développé et appelé oxydation par voie humide utilise l'oxygène de l'air pour convertir les polluants organiques en dioxyde de carbone et eau. La réaction nécessite des conditions opératoires de température et pression élevées situées respectivement dans les gammes de 20 à 350°C et $2.10^6$ à $2.10^7$ Pa. En pratique, la pression de fonctionnement est supérieure à $8.10^6$ Pa et la température est environ 250°C. Des catalyseurs métalliques ont été mis au point pour réduire les coûts d'infrastructure et d'exploitation liés aux conditions de fonctionnement. Ces catalyseurs peuvent être homogènes, introduits en phase aqueuse sous forme de sels des métaux de transition $Cu^{2+}$, $Fe^{2+}$, $Zn^{2+}$, $Co^{2+}$ ... mais imposent alors la nécessité d'un traitement ultérieur de séparation. C'est pourquoi, des catalyseurs hétérogènes sont aujourd'hui développés comme décrit dans WO 96/13463 et US 5,145,587. Ces catalyseurs solides sont composés des métaux vanadium, chrome, manganèse, fer, cobalt, nickel, cuivre, zinc, niobium, molybdène, tungstène, ruthénium, rhodium, iridium, palladium, platine, argent, or, bismuth, éventuellement en mélange et déposés sur un support minéral comme l'alumine, les zéolites, la silice, le charbon actif, le dioxyde de titane, la zircone, la cérine, etc. . . L'oxydation par voie humide réalise un abattement conséquent de la DCO d'eaux résiduaires chargées en matières organiques tels que les effluents des industries : distilleries, fabriques de pâte à papier, pétrochimie etc. . . Toutefois, au-delà de la difficulté de mise en oeuvre due au milieu réactionnel corrosif et à la formation de dépôts minéraux, l'application de l'oxydation par voie humide reste limitée car elle produit des composés organiques oxygénés de faible poids moléculaire dont la minéralisation est très lente.

Parmi les oxydants chimiques utilisés en traitement d'eau, l'ozone est le réactif le plus puissant ($E°(O_3)$= 2,08 V, $E°(H_2O_2)$= 1,78 V, $E°(ClOH)$= 1,49 V, $E°(Cl_2)$= 1,36 V, $E°(ClO_2)$= 1,27 V, $E°(O_2)$= 1,23 V). Compte tenu de sa réactivité vis-à-vis des composés organiques, le domaine d'application de l'ozone couvre le traitement des eaux de consommation, des eaux industrielles et des eaux usées urbaines. L'ozone tend aujourd'hui à remplacer le chlore dans son rôle de désinfectant des eaux à potabiliser du fait de l'absence de produits de dégradation nuisibles pour les qualités organoleptiques telle que la couleur, l'odeur et le goût de l'eau traitée. L'ozone est mis en oeuvre depuis de nombreuses années en tant qu'agent bactéricide et virulicide des eaux potables et plus généralement pour l'oxydation des matières organiques et des micropolluants. L'ozone est également l'oxydant chimique de choix dans les traitements spécifiques de déferrisation et démanganisation. L'ozonation peut être appliquée en traitement complémentaire pour une eau dont la charge organique est très importante pour aider à sa clarification. L'ozone transforme les polluants organiques en composés plus polaires et de masses molaires plus faibles et améliore de ce fait sa biodégradabilité et l'adsorption ultérieure sur charbon actif (voir par exemple GB 1417573, FR-A-2738235). Du fait de sa structure dipolaire, l'ozone réagit facilement avec les composés présentant une insaturation ou des sites de forte densité électronique. D'une façon générale, la vitesse d'ozonation de différents substrats organiques suit l'ordre de réactivité décroissant : thiol, amine, alcyne, alcool, aldéhyde, alcane, cétone, acide carboxylique et devient très sévèrement limitante à partir des alcanes. Or, l'oxydation des composés organiques génère dans tous les cas des produits à fonction oxygénée qui comme les organochlorés se révèlent inertes vis-à-vis de l'ozone, d'où globalement les abattements du carbone organique total restent faibles.

D'un point de vue chimique, le seul moyen d'obtenir des rendements d'oxydation poussés est d'activer les systèmes oxydants de façon à former dans le milieu réactionnel des entités plus réactives et moins sélectives. Les procédés d'oxydation chimique avancée dénommés AOP sont basés sur la génération dans le milieu réactionnel du radical hydroxyle dont le potentiel d'oxydoréduction est bien supérieur à celui de l'ozone ($E°(HO°)$= 2,80 V). Ils impliquent un apport d'énergie chimique ou photochimique pour activer l'ozone et induire la formation de radicaux hydroxyles capables d'oxyder la plupart des polluants organiques jusqu'à leur minéralisation complète.

L'activation photochimique de l'ozone est réalisée par irradiation UV et produit théoriquement une mole de radical hydroxyle pour 1,5 mole d'ozone et 0,5 mole de photon consommé. Son efficacité est fortement limitée par la présence de substances chromophores et par la turbidité de l'eau à traiter qui gênent la pénétration de rayonnements. De plus, outre le coût engendré par l'utilisation d'intensités d'irradiation élevées, la complexité des réacteurs adaptés pour la mise en oeuvre constitue le principal frein au développement de cette technique (voir par exemple US 5,637,231, US 5,178,755, EP-A-60941 et US 3,924,139).

L'activation chimique de l'ozone par le peroxyde d'hydrogène est en théorie plus performante que l'activation photochimique puisqu'une mole de radical hydroxyle résulte de l'interaction d'une mole d'ozone et de 0,5 mole de peroxyde d'hydrogène. Cependant, alors que le système combiné $O_3/H_2O_2$ est montré comme particulièrement adapté pour l'élimination de nombreux micropolluants organiques pour la potabilisation d'eau, le gain en rendement d'oxydation observé pour les eaux résiduaires industrielles par rapport à l'ozonation dépend fortement de la nature des substrats à oxyder (voir par exemple FR-A- 2640957, FR-A-2563208, FR-A-2699914, US 4,792,407, US 4,849,114). Ainsi l'addition de peroxyde d'hydrogène peut s'avérer totalement superflue dans le cas où l'ozonation de la matière organique conduit à la formation de peroxyde d'hydrogène in situ. Par ailleurs, le surcoût d'exploitation lié à l'addition du peroxyde d'hydrogène peut atteindre 100 % par rapport à l'ozonation hors activation.

En tout état de cause, une des limitations majeures des procédés d'oxydation avancée tels que l'ozonation avec irradiation photochimique ou en présence de peroxyde d'hydrogène incombe au mode d'action même du système oxydant. En effet, des composés minéraux ou organiques piégeurs de radicaux libres peuvent entrer en compétition avec les matières organiques à oxyder. Il en résulte une inhibition du processus d'oxydation radicalaire par dérive du flux de radicaux hydroxyles et par voie de conséquence, une efficacité de traitement au mieux égale à celle de l'ozonation hors activation et un abattement en carbone organique total faible. Or, les inhibiteurs de décomposition de l'ozone correspondent à des composés fréquemment rencontrés en concentration variable dans les eaux à traiter : acétate, tert-butanol, composés aliphatiques saturés, carbonates, bicarbonates, phosphates.

Une autre voie d'activation de l'ozone consiste à promouvoir l'oxydation par l'adsorption des molécules organiques. GB-A-2269167 décrit un procédé d'ozonation d'eaux résiduaires basé sur une mise en contact particulière de l'eau avec un mélange d'ozone et d'oxygène. L'oxydation des polluants organiques de l'eau est réalisée par injection continue ou séquencée du mélange gazeux au travers d'une charge mixte de matériau inerte et de matériau carboné disposée dans un réacteur en couches alternées et qui assure un écoulement tortueux de l'eau. Le matériau carboné tel que le charbon actif en grains ou le charbon est assimilé à un catalyseur de par son rôle d'adsorbant vis-à-vis de la matière organique. Les performances de l'installation ne sont pas exemplifiées.

De même, WO 90/14312 concerne un procédé et une installation d'ozonation avec activation UV ou par catalyseur solide pour l'élimination de polluants organiques toxiques tels que les hydrocarbures halogénés. Les catalyseurs décrits, charbon actif, alumine et/ou silice, éventuellement dopés par un métal de transition, agissent en tant qu'adsorbants de forte affinité pour les composés organiques et l'ozone. Ils se caractérisent par une surface spécifique supérieure ou égale à 50 m$^2$/g pour un volume poreux au moins égal à 0,1 cm$^3$/g et sont mis en oeuvre en colonnes remplies. Deux exemples illustrent l'application du système oxydant ozone/charbon actif ou ozone/charbon actif et silice pour l'abattement de faibles concentrations en composés organiques spécifiques.

EP-A-0625482 décrit un procédé et son installation pour l'oxydation d'effluents chargés en matière organique qui impliquent également une adsorption sur support minéral et l'ozonation des polluants organiques retenus de manière continue ou séquentielle. Le support adsorbant décrit peut être le charbon actif, l'alumine activée, l'oxyde de cuivre, l'oxyde de magnésium, le dioxyde de titane et l'oxyde de zinc seuls ou en mélange. Le support utilisé préférentiellement est l'alumine activée pour son inertie vis-à-vis de l'ozone. La dose d'ozone impliquée dans le procédé peut varier de 0,1 à 2 g/g DCO de l'effluent à traiter, la voie réactionnelle visée étant l'oxydation radicalaire de la matière organique concentrée sur le support adsorbant par les radicaux hydroxyles formés in situ à partir de l'ozone. L'installation met en oeuvre un réacteur au moins partiellement rempli de matériau adsorbant avec admission éventuellement alternée, en mode co-courant ascendant de l'effluent et du gaz ozoné avec circuit de recirculation de l'effluent. Dans le cas de l'ozonation continue, elle prévoit en outre l'injection d'un agent de décomposition de l'ozone tel que le peroxyde d'hydrogène, la soude, la chaux, le sulfite ou l'hyposulfite de sodium, le dioxyde de soufre, l'irradiation ultraviolette ou d'ultrasons. Les exemples sont consacrés à l'application du procédé à l'abattement de l'indice de peroxyde et de l'absorbance UV d'une eau de rivière et à l'abattement de la DCO d'un lixiviat de décharge. Ils montrent respectivement les effets bénéfiques de l'injection d'ozone en mode discontinu par rapport au mode continu et de l'addition séquentielle de peroxyde d'hydrogène et justifient la préférence de l'alumine comme matériau adsorbant par rapport au charbon actif ou par rapport à des matériaux non adsorbants tels que le quartz ou le schiste.

D'autres publications décrivent l'utilisation des matériaux inorganiques ci-avant employés pour leur capacité d'adsorption en tant que catalyseurs hétérogènes d'ozonation. EP-A-0436409 propose un procédé d'ozonation en présence de dioxyde de titane pour augmenter significativement le pouvoir oxydant de l'ozone à l'égard de la matière organique, des éléments minéraux réducteurs et des micro-organismes. Le dioxyde de titane est utilisé soit pur, soit fixé sur un support minéral tel que la céramique ou un support organique comme un polymère de synthèse, et il est mis en forme de grains de 30 à 500 microns de diamètre, d'éléments de garnissage, de membrane de micro ou ultrafiltration en céramique. Sa forme dépend de la technologie mise en oeuvre: réacteur d'ozonation à lit fluidisé, à lit fixe, avec séparation membranaire ultérieure. Le taux d'ozonation varie entre 0,5 et 10 mg d'ozone/l pour une quantité de dioxyde de titane en recirculation de 0,1 à 15 g/l. L'efficacité du traitement est améliorée par l'addition d'un catalyseur homogène constitué par un sel métallique de cuivre, aluminium, argent, zinc, nickel, titane, manganèse ou de préférence du fer, par la suite séparé de l'eau traitée sous forme d'hydroxyde. Deux exemples mettent en évidence l'effet de la présence de dioxyde de titane dans le cas de l'élimination d'un pesticide d'une part et dans le cas de l'élimination de la matière organique d'origine naturelle d'autre part.

WO 96/21623 a pour objet une installation de traitement d'eaux résiduaires comprenant un réacteur fonctionnant sous pression, contenant un catalyseur granulaire et alimenté par un fluide constitué d'un mélange de gaz ozoné et d'effluent. Cette technique connue vise la simplification de la mise en oeuvre du procédé d'ozonation avec décomposition catalytique finale de l'ozone en système triphasique gaz/liquide/solide. L'installation décrite assure grâce à une pompe, la sursaturation de l'effluent en ozone. Le fluide résultant exempt de bulles de gaz alimente en courant ascendant un réacteur d'ozonation avec lit catalytique dans sa partie haute. La seule indication relative au catalyseur concerne sa morphologie granulaire.

Suivant le même principe, WO 97/14657 décrit un procédé d'oxydation avancée d'eaux résiduaires qui enchaîne une ozonation directe de l'effluent pour oxyder les polluants réactifs et dissoudre l'ozone et une oxydation par l'ozone dissous activé en présence d'un catalyseur solide pour oxyder les polluants inertes vis-à-vis de l'ozone. Ce procédé implique des catalyseurs solides connus et habituellement utilisés dans le domaine de la synthèse chimique et de l'oxydation avancée de l'eau : oxyde des métaux de transition cobalt, cuivre, fer, manganèse, nickel éventuellement supporté sur alumine, silice/alumine, gel de silice, charbon actif, dioxyde de titane, zircone. Parmi ceux-ci, le catalyseur de choix est la $\gamma$-alumine non dopée et éventuellement supportée sur l'$\alpha$-alumine de préférence. La description de l'invention fait en outre état des caractéristiques physico-chimiques des catalyseurs mis en forme de granules, pastilles ou monolithiques avec une surface spécifique faible ($\leq 20$ m$^2$/g) et/ou une porosité élevée ($\geq 2$ pores/cm linéaire) et présentant une faible perte de charge ($\leq 0.1.10^5$ Pa.g). Ce procédé est applicable au traitement d'eaux usées de DCO inférieure ou égale à 5000 mg/l dans l'objectif d'abattre la DCO jusqu'à environ 125 mg/l. Sont proposés deux schémas de mise en oeuvre suivant la valeur de la DCO initiale de l'effluent à traiter : un réacteur d'ozonation directe avec alimentation à co-courant en gaz et liquide, un réacteur catalytique en série dans lequel l'effluent circule en courant ascendant avec éventuellement un recyclage vers le contacteur gaz/liquide. Les exemples concernent la réduction de la DCO d'une solution synthétique de glucose par ozonation en présence de divers catalyseurs commercialisés comparée à l'ozonation avec activation photochimique. Ils font apparaître la meilleure activité du catalyseur $\gamma$-Al$_2$O$_3$ devant MgO, ce dernier étant plus efficace que des catalyseurs contenant 3 % et 18 % d'oxyde de cobalt supporté.

FR-A- 2291687 est basé sur l'utilisation de catalyseurs d'oxydation connus pour l'amélioration des performances de l'ozonation dans l'élimination de composés oxydables en terme de quantité d'ozone requise. De nombreuses formulations élémentaires de catalyseurs sont citées mais seule est revendiquée l'utilisation de catalyseurs comprenant un oxyde insoluble de chrome, manganèse, vanadium, cuivre sur support minéral et dont la composition est à adapter en fonction de la nature du substrat à oxyder. Les exemples comparent l'élimination de sulfure par ozonation à co-courant en présence de divers catalyseurs en perles disposées en lit fixe. Ils montrent que la quantité d'ozone nécessaire diminue suivant la séquence d'activité croissante des catalyseurs platine sur alumine, chrome sur silico-aluminate, mélange cuivre-chrome sur alumine.

Le brevet US 4,040,982 spécifie quant à lui une seule formulation de catalyseur d'ozonation pour l'élimination de polluants d'eaux résiduaires. Ce catalyseur hétérogène est constitué de 1 à 20 % en masse d'oxyde ferrique déposé sur de l'alumine catalytiquement active. De plus, il est caractérisé du point de vue physico-chimique par une surface spécifique comprise entre 150 et 450 m$^2$/g et un volume poreux d'au moins 0,3 cm$^3$/g. Il est élaboré par imprégnation avec une solution d'un sel ferrique de $\gamma$-alumine ou de $\eta$-alumine, d'alumine amorphe ou d'alumine activée, séchage à 100-180°C, calcination du produit résultant à 510-570°C et mis en forme de billes ou d'extrudés. Les exemples traitent de l'ozonation en réacteur tubulaire à contre-courant d'une eau contaminée par du phénol. Le catalyseur mis en oeuvre et considéré comme le meilleur, est composé par 10 % d'oxyde ferrique sur $\gamma$-alumine de surface spécifique 370 m$^2$/g pour un volume poreux de 0,95 cm$^3$/g.

Le brevet US 4,007,118 entérine l'utilisation d'un oxyde métallique du manganèse, fer, cuivre ou nickel en poudre dans un procédé d'ozonation pour la désinfection ou la dépollution organique d'eaux usées. L'ozonation est réalisée par injection d'ozone dans un réacteur contenant le catalyseur disposé dans des sacs en toile, déposé sur un support ou dispersé au sein de l'effluent à traiter. Les exemples mentionnés dans cette publication portent sur la réduction du temps d'ozonation nécessaire en présence des catalyseurs pour atteindre 25 % d'abattement d'une concentration de 0,25 mg/l en quinoline d'un effluent synthétique. Ils illustrent l'effet du pH, de la température du milieu réactionnel et mettent en évidence l'ordre d'activité des catalyseurs croissant suivant la séquence NiO, Mn$_2$O$_3$ ou Fe$_2$O$_3$ et CuO.

Le brevet EP-A-354664 a quant à lui pour sujet un catalyseur plus élaboré à employer dans le traitement d'eaux résiduaires par l'ozone pour la désodorisation, la stérilisation et la décoloration ou pour la décomposition de l'ozone dissous résiduel. Deux types de constituants entrent dans la formulation du catalyseur pour le rendre suffisamment actif. Le premier composant peut être l'oxyde de titane, de silicium, d'aluminium et/ou de zirconium et le deuxième composant appartient au groupe étendu des métaux manganèse, fer, cobalt, nickel, cérium , tungstène, cuivre, argent, or, platine, palladium, rhodium, ruthénium, iridium et tout composé de ces métaux peu soluble dans l'eau. Il est spécifié que chaque composant utilisé séparément conduit à des catalyseurs peu actifs et de qualité instable. Plus précisément, le catalyseur objet de l'invention est composé par 70 à 99,99% du premier type de constituant et par 30 à 0,01 % du deuxième type de constituant. La méthode d'élaboration décrite comme avantageuse consiste à mélanger dans l'eau le premier constituant en poudre avec le métal de transition et/ou le métal précieux, mouler le mélange résultant, le sécher à 50-120° C et calciner le solide pendant 1 à 10 h à température comprise entre 300 et 800°C. Le catalyseur se présente sous forme de pastilles ou de nids d'abeille de dimensions déterminées pour une mise en oeuvre en lit fixe pour un débit de traitement inférieur à 1 m$^3$/h.m$^3$. Les nombreux exemples rapportés corroborent la variété de composition des catalyseurs actifs. L'ensemble des catalyseurs constitués d'oxyde de titane et/ou de silice et/ou de zircone ou d'alumine comme premier composant et des métaux de transition cérium, rhodium, manganèse, fer, cuivre, argent, nickel, platine, ruthénium; iridium, or, palladium, cobalt comme deuxième composant conduisent strictement aux mêmes taux d'élimination de la couleur, de l'odeur, de colibacilles, d'ozone dissous résiduel d'un effluent secondaire et à des rendements quasi-équivalents de décomposition d'ozone dissous en solution aqueuse synthétique.

Le brevet EP-A-0361385 restreint la gamme des constituants de catalyseurs analogues appliqués pour la désodorisation à l'ozone de gaz pollués. La composition des catalyseurs inclut d'une part, un élément actif soit au moins un oxyde des métaux de transition cuivre, manganèse, cobalt, fer et nickel et d'autre part un matériau support choisi parmi le dioxyde de titane, l'oxyde d'argent et l'or. La proportion du catalyseur en métal actif peur varier dans une large gamme de 25 à 95% et est au mieux supérieure à 50% pour assurer l'efficacité du traitement et la durée de vie du catalyseur. Il est fabriqué et mis en forme d'après les techniques éprouvées préférentiellement de manière à produire un matériau à couche superficielle d'élément actif d'épaisseur comprise entre 10 et 200 μm pour promouvoir l'adsorption des composés malodorants. Les exemples montrent que les catalyseurs selon l'invention sont efficaces dans l'élimination par l'ozone en phase gazeuse du sulfure d'hydrogène, de l'ammoniac, de la méthylamine et de l'ozone résiduel sans variation significative des rendements d'élimination en fonction de la nature des éléments constitutifs des catalyseurs.

Plus récemment, WO 97/08101 décrit un procédé d'épuration d'eaux résiduaires par oxydation à température et pression ambiantes en présence de peroxyde d'hydrogène, d'oxygène ou d'ozone et d'un catalyseur hétérogène constitué d'un élément du groupe des métaux de transition, métaux alcalins, alcalino-terreux, pur ou en mélange et supporté sur un oxyde métallique. Ce procédé est destiné au traitement d'eaux résiduaires industrielles chargées en polluants organiques pour abattre leur DCO. L'oxydant est employé en association avec un catalyseur préparé par imprégnation du matériau support avec une solution aqueuse ou organique de l'élément. La composition élémentaire préférentielle du catalyseur comprend un ou plusieurs métaux du groupe ruthénium, cobalt, fer, cuivre, manganèse, lithium supporté sur un ou plusieurs oxydes métalliques parmi l'oxyde de plomb, de zirconium, de titane, de magnésium et au mieux correspond à du fer déposé sur oxyde de magnésium, séché et calciné à 400°C pendant deux heures. L'oxydation catalytique peut être effectuée à partir du catalyseur en poudre, pastilles ou granules dans un réacteur catalytique classique à un débit de traitement inférieur à 1 m$^3$ d'effluent/h.m$^3$ de catalyseur et avec ajustement du pH de préférence au-delà de pH 6. Le catalyseur est susceptible d'être recyclé après régénération par séchage et calcination. Un seul exemple concerne l'ozonation. Dans cet exemple, l'ozonation catalytique est appliqué à un effluent de synthèse de colorants en présence des catalyseurs à 2 % de métal : Fe/MgO, Cu-Fe/MgaO, Cu/MgO, Mn/MgO et Fe-Cu-Mn/MgO. Les abattements de DCO mesurés justifient le choix du fer sur oxyde de magnésium comme meilleur catalyseur.

L'état de l'art concernant l'ozonation en présence d'un catalyseur pour le traitement de l'eau fait apparaître une grande disparité dans la nature même des catalyseurs engagés. Certains procédés mettent en oeuvre des matériaux inorganiques tels que le charbon actif, l'alumine, la silice, les oxydes de cuivre, de magnésium, de zinc, le dioxyde de titane sélectionnés pour leur capacité d'adsorption de la matière organique, laquelle est susceptible de promouvoir l'oxydation des composés retenus par l'ozone en favorisant le contact entre les réactifs.

D'autres procédés proposent l'utilisation de catalyseurs hétérogènes constitués d'un matériau minéral éventuellement dopé par un élément métallique tel que cobalt, cuivre, fer, manganèse, nickel, chrome, vanadium, ruthénium, lithium, . . et mis au point dans les domaines de la synthèse organique et de l'épuration de l'eau pour l'oxydation des composés organiques principalement par l'oxygène.

Enfin, d'autres procédés utilisent des catalyseurs plus spécifiques de l'ozonation mais dont les compositions varient à la fois de par la nature du support minéral et la nature de l'élément métallique déposé (chrome, manganèse, fer, vanadium, cuivre, nickel ...), une des raisons invoquées étant la nécessaire adaptation du catalyseur à la nature des composés organiques à éliminer. Par ailleurs, l'ensemble de ces procédés d'ozonation catalytique base la démonstration du bien-fondé de l'utilisation de catalyseur dans l'ozonation pour l'élimination de la matière organique sur l'amélioration des taux d'abattement soit de la Demande Chimique en Oxygène soit de concentrations en composés particuliers. Or, ces deux paramètres quoique nécessaires, peuvent s'avérer insuffisants pour juger de l'étendue de la minéralisation des polluants organiques par l'ozone.

Sur le plan fondamental, un catalyseur est défini comme une substance capable d'exercer sur l'évolution d'une réaction chimique thermodynamiquement possible, un effet accélérateur et un effet d'orientation ; il doit, de surcroît, se retrouver inaltéré à la fin de la réaction dont il ne peut, pas conséquent, modifier l'équilibre thermodynamique. En phase homogène, les réactifs et le catalyseur soluble sont uniformément répartis dans le milieu réactionnel. En catalyse de contact ou catalyse hétérogène, la réaction se produit entre réactifs adsorbés à la surface du catalyseur. Le cycle catalytique comporte les étapes consécutives suivantes, d'influence variable sur la vitesse globale de la transformation chimique :

- diffusion des réactifs vers le catalyseur ;
- interaction des réactifs avec le catalyseur (adsorption) ;
- réaction entre les réactifs adsorbés pour donner les produits ;
- désorption des produits à la surface du catalyseur vers le milieu le plus souvent liquide ;
- diffusion des produits à partir du catalyseur.

Alors que la première et la dernière étapes correspondent à des processus physiques de transfert de matière, les étapes intermédiaires impliquent des phénomènes chimiques, la réaction se produisant entre les espèces chimisorbées par réarrangement de complexes de surface. Dès lors, il apparaît que si, au cours de l'ozonation catalytique, l'adsorption des polluants organiques à la surface du catalyseur doit être favorisée, elle ne constitue qu'une étape préliminaire à la réaction chimique. En tant que telle, elle ne peut suffire à initier le cycle catalytique. Le catalyseur ne peut donc pas être sélectionné sur la seule base de sa capacité d'adsorption de la matière organique, d'autant que pour être relativement peu spécifique et ainsi intéresser un large spectre de composés, l'adsorption doit se limiter à une adsorption physique mettant en jeu des forces de Van der Waals.

Au niveau de l'acte catalytique, la physisorption ne présente qu'un seul point d'intérêt : permettre la chimisorption subséquente. Cette dernière a par contre, les mêmes caractéristiques qu'une réaction chimique : il en résulte la formation de liaisons covalentes ou ioniques entre la surface du catalyseur et la molécule de polluant adsorbée. Toutefois, comme pour la physisorption, la chimisorption du substrat ne mène pas nécessairement à la réaction catalytique : quand elle est trop forte, elle devient irréversible et conduit à l'empoisonnement du catalyseur. De même, les produits de réaction trop fortement chimisorbés sur le catalyseur peuvent interdire l'accès de la surface active aux réactifs et inhiber les réactions ultérieures. Par ailleurs, contrairement à la physisorption, la chimisorption est très spécifique et de ce fait conditionne l'activité des espèces minérales dans la catalyse de la réaction. Etant donné la diversité des polluants organiques contenus dans les eaux à traiter, ces considérations fondamentales expliquent la grande variété des catalyseurs développés dans l'état de l'art de l'ozonation catalytique.

En outre, les catalyseurs d'oxydation antérieurement mis au point dans les domaines de la synthèse organique et par extrapolation, de l'épuration de l'eau ont pour rôle d'activer le peroxyde d'hydrogène, les peroxydes organiques et l'oxygène (R.L. Augustine, dans "Heterogeneous Catalysis for the Synthetic Chemist", chapitre 21, Marcel Dekker Inc., New York, 1996 ; G. Strukul, dans "Catalytic Oxidations with Hydrogen Peroxide as Oxidant", Catalysis by Metal Complexes, volume 9, R. Ugo et B.R. James, Kluwer Academic Publishers, Dordrecht, 1992). Il est connu que de nombreux métaux sous forme homogène ou hétérogène sont capables de former des espèces oxydantes plus réactives à partir de ces oxydants primaires. Il est notamment admis que parmi ceux-ci, les métaux à couple redox à un électron catalysent l'oxydation homolytique des substrats organiques de façon non-sélective en milieu aqueux, l'oxydation à deux électrons étant également possible. Dans tous les cas, l'activité du métal est reconnue essentielle dans la propagation de la chaîne de réactions radicalaires. Le mode d'action radicalaire de ces catalyseurs d'oxydation mis en oeuvre pour le traitement de l'eau pose à nouveau le problème de l'effet inhibiteur de certains composés minéraux et organiques piégeurs de radicaux libres. En ce sens, l'utilisation au cours de l'ozonation des catalyseurs développés pour activer l'oxygène et/ou le peroxyde d'hydrogène rejoint les voies d'activation de l'ozone par rayonnement U.V. ou addition de peroxyde d'hydrogène. De plus, la variété des catalyseurs envisageables est telle qu'elle justifie la diversité des catalyseurs proposés dans l'état de l'art de l'ozonation catalytique.

L'état de la technique décrit ci-dessus montre la difficulté de définition d'un catalyseur d'ozonation à large spectre pour l'élimination de la matière organique contenue dans les eaux polluées. Partant de ce problème, la présente invention se propose d'apporter une solution qui consiste en un procédé d'ozonation catalytique pour le traitement de l'eau d'une part à caractère universel et permettant d'autre part une réduction substantielle du Carbone Organique Total.

En conséquence, cette invention a pour objet un procédé d'ozonation catalytique par l'ozone moléculaire ou par un gaz contenant de l'ozone, pour l'épuration d'eaux usées, qui consiste à activer l'ozone par un catalyseur constitué au moins d'atomes de cobalt, afin de réaliser l'oxydation avancée des polluants organiques contenus dans les eaux en transformant le Carbone Organique Total des eaux en dioxyde de carbone, caracterisé en ce que le catalyseur est introduit dans le milieu d'ozonation sous une forme insoluble correspondant à une catalyse hétérogène, en ce que le cobalt qu'il contient représente de 0,1% à 20% de la masse totale du catalyseur et en ce que le support utilisé présente une surface spécifique de 10 $m^2$/g à 700 $m^2$/g pour un volume poreux de 0.1 ml/g à 51.3ml/g.

Ainsi, l'invention apporte un procédé d'oxydation principalement en dioxyde de carbone et eau, par l'ozone moléculaire ou un gaz en contenant, de composés à chaîne carbonée aliphatique ou cyclique, saturée ou insaturée, portant des atomes d'hydrogène et/ou des groupements fonctionnels oxygénés, azotés, phosphorés, soufrés et/ou des substituants halogénés, gazeux et/ou liquides et/ou solides contenus ou issus de l'eau polluée, en présence d'un catalyseur constitué au moins d'atomes de cobalt.

Comme on le comprend, le catalyseur mis en oeuvre selon le procédé de l'invention et mis au point selon une méthodologie rigoureuse constitue l'essence même du procédé d'ozonation catalytique objet de la présente invention, et lui confère son originalité et son efficacité. Le système oxydant ozone/catalyseur selon l'invention permet la minéralisation des polluants organiques de l'eau selon un processus parfaitement catalytique initié par la formation d'une espèce métallique du cobalt au pouvoir oxydant très élevé par réaction de l'agent actif du catalyseur avec l'ozone. La minéralisation des substrats organiques et l'abattement du Carbone Organique Total qui en résulte, procède par réactions successives avec l'espèce active du cobalt jusqu'à la libération de dioxyde de carbone principalement. En effet, le mode d'action du catalyseur d'ozonation implique un processus de type moléculaire capable de provoquer la rupture des liaisons covalentes engagées dans les molécules organiques c'est-à-dire les liaisons Carbone-Carbone, Carbone-Oxygène, Carbone-Azote, Carbone-Phosphore, Carbone-Soufre, Carbone-Hydrogène, Carbone-Halogène ... Parallèlement à la libération de dioxyde de carbone à partir de l'élément carbone, le catalyseur d'ozonation provoque l'élimination des hétéroéléments azote, phosphore et soufre sous leur forme la plus oxydée, respectivement nitrate, phosphate et sulfate.

De ce fait, l'intérêt du procédé d'ozonation catalytique selon l'invention est multiple. En premier lieu, l'augmentation du pouvoir oxydant de l'ozone sous l'effet de l'agent actif du catalyseur autorise des taux d'abattement du Carbone Organique Total pouvant atteindre des valeurs supérieures à 95 % quelles que soient les teneurs initiales en COT des eaux traitées. En second lieu, la réactivité accrue des polluants organiques en présence du système oxydant ozone/catalyseur conduit notamment à une réduction conséquente de la quantité d'ozone nécessaire pour atteindre une élimination de Carbone Organique Total donné par rapport à d'autres types d'ozonation tels que décrits dans l'état de l'art antérieur.

Par ailleurs, eu égard au mode d'action du couple ozone/catalyseur, d'importantes réductions des teneurs en azote, phosphore et soufre organiques peuvent être obtenues simultanément à l'abattement du Carbone Organique Total. En conséquence, les risques d'empoisonnement du catalyseur habituellement rencontrés dans l'état antérieur de la technique, en présence de composés soufrés ou azotés ou par dépôt de dioxyde de carbone sous forme de carbonate sont exclus. De plus, selon des études spécifiques, le système ozone/catalyseur opère sans intervention d'espèces radicalaires générées. Ainsi, on évite les problèmes d'inhibition invoqués dans l'état de l'art antérieur lors de l'activation radicalaire de l'ozone en présence de nombreux composés piégeurs de radicaux.

Pour l'ensemble des avantages qu'il procure, liés à l'activité de l'agent actif cobalt, le catalyseur d'ozonation présente un caractère unique par rapport à l'action des métaux de transition dans l'ozonation de polluants organiques telle que décrite dans l'état de l'art antérieur (voir par exemple R. Gracia, J.L. Aragües, J.L. Ovelleiro, Ozone Science & Engineering, 18, 195-208, 1996).

A ce titre, le procédé d'ozonation catalytique selon l'invention peut avantageusement être mis en oeuvre pour atteindre une teneur en Carbone Organique Total et une valeur de DCO y afférente faibles conformément aux réglementations d'usage, et/ou être inclus dans une filière de traitement plus complexe pour tirer profit de combinaisons judicieuses connues de l'homme de métier.

Les composés organiques plus particulièrement concernés par le procédé de l'invention correspondent aux substances les moins réactives voire inertes vis-à-vis de l'ozone hors ou avec activation tel que décrit dans l'état de l'art antérieur soit à titre indicatif les alcanes, les cétones et les acides carboxyliques. De ce fait, le domaine d'application peut couvrir toutes les gammes d'eaux à traiter depuis les eaux à potabiliser jusqu'aux eaux résiduaires industrielles.

En effet, on a constaté, de façon surprenante compte tenu de l'état antérieur de l'art, que le cobalt présente une activité particulière vis-à-vis de l'ozone, par rapport à d'autres éléments métalliques tels que titane, vanadium, chrome, manganèse, fer, nickel, cuivre, zinc, zirconium, molybdène et étain. La spécificité du cobalt dans l'activation de l'ozone est clairement démontrée par la classification empirique établie à partir des précurseurs métalliques sous forme de sels dissous et/ou d'oxydes insolubles purs ou supportés sur matériau minéral mis en contact avec une solution aqueuse ozonée en continu. La classification tenant compte à la fois de la réactivité des différents métaux, de leur stabilité et de leur régénérabilité met en évidence l'activité catalytique exceptionnelle du cobalt comparée aux autres métaux (tableau 1 ci-après). L'activité relative des métaux telle que présentée dans ce tableau 1 est définie comme mentionné ci-après à partir de la fréquence de rotation p pour un temps $t_1$ correspondant à la stoechiométrie ozone : métal égale à 5, corrigée du taux de variation de la fréquence de rotation $\Delta\rho$ pour un temps $t_2$ égal à 2 fois $t_1$, corrigée du taux de perte en métal $\Delta M$, et exprimée pour chaque métal par rapport au cobalt pris comme référence :

$$\rho = \frac{\text{nombre de moles d'ozone consommé}}{\text{nombre de moles de métal } M . t_1}$$

$$\text{Activité du métal } M = \frac{\rho_{t_1} . \Delta\rho_{t_2}}{\Delta M}$$

$$\text{Activité relative du métal } M = \frac{\text{Activité du métal } M}{\text{Activité du cobalt}}$$

Tableau 1

| Métaux | Ti, Zr, V, Cr, Mo, Fe, Cu, Zn, Sn | Mn, Ni | Co |
|---|---|---|---|
| Activité relative % | 0 | 20-30 | 100 |
| Classe | C | B | A |

Sur la base de cette classification parfaitement reproductible, le cobalt comme agent actif se distingue des métaux des classes B et C par une vitesse de réaction avec l'ozone plus élevée, l'absence d'altération de l'activité et une régénération optimale. L'ensemble des améliorations observées pour le catalyseur à base de cobalt est inhérent à la réaction particulière entre le cobalt et l'ozone laquelle initie le cycle catalytique en formant une espèce métallique du cobalt au degré d'oxydation III caractérisée par un fort pouvoir oxydant et dont l'évolution dans le milieu réactionnel permet de régénérer le précurseur de l'espèce active du cobalt au degré d'oxydation II. Il a été montré par des études mécanistiques poussées que l'activation de l'ozone par le catalyseur au cobalt se produit sans formation de radicaux et/ou de peroxydes, espèces souvent invoqués dans l'état de l'art antérieur pour expliquer la réactivité de l'ozone avec les métaux. De par les qualités spécifiques décrites ci-avant, le catalyseur d'ozonation contenant du cobalt par rapport aux autres métaux, se traduit outre par l'amélioration des rendements de minéralisation de la matière organique, par des gains appréciables au niveau industriel soit : un réacteur de plus faible volume, la mise en oeuvre de quantité de catalyseur moindre, un temps de contact réduit, une durée de vie plus élevée, une perte en métal minimisée. De ce fait, l'originalité de la composition du catalyseur d'ozonation objet essentiel de la présente invention constitue, un réel progrès par rapport à l'état de la technique d'ozonation catalytique.

Le catalyseur est, de façon classique introduit dans le milieu d'ozonation sous la forme insoluble correspondant au type de catalyse hétérogène.

Le catalyseur au cobalt selon l'invention est hétérogène soit massique sous forme d'oxydes insolubles purs ou mélangés, soit supporté. Ledit catalyseur est avantageusement déposé sur un support minéral qui a pour rôle de conférer au catalyseur sa texture, sa résistance mécanique, sa morphologie et éventuellement une certaine activité.

Le matériau support peut être un oxyde des éléments silicium, étain, aluminium, zinc, cuivre, nickel, fer, manganèse, chrome, molybdène, vanadium, titane, zirconium, cérium, magnésium, calcium, strontium, baryum pur ou en mélange et contenant éventuellement des groupements phosphates ou sulfates. De préférence, le catalyseur est constitué de cobalt déposé sur un support minéral à propriété acide ou redox tel que la silice, l'alumine, le dioxyde de titane, la zircone, le dioxyde d'étain, l'oxyde de fer purs ou en mélange. Parmi ces derniers, le support préférentiellement utilisé est dans l'ordre, la silice, le dioxyde de titane, le dioxyde de zirconium. En effet, alors que l'ensemble des supports envisagés ont été montrés catalytiquement inactifs vis-à-vis de l'ozone, il s'avère que le support suivant sa nature peut favoriser l'activité du cobalt déposé grâce à un effet participant lié à ses propriétés de surface qui conditionnent l'environnement électronique du métal. A teneur en métal équivalente, l'utilisation de la silice comme support procure une augmentation de 30 % de l'activité du cobalt par rapport au catalyseur cobalt sur alumine. Au point de vue caractéristiques physico-chimiques, les supports utilisés ont une surface spécifique variable de 10 $m^2$/g à 700 $m^2$/g pour un volume poreux de 0,1 ml/g à 1,3 ml/g.

La quantité de cobalt déposée peut varier largement et sera déterminée lors de la préparation des catalyseurs hétérogènes. On peut indiquer que généralement le cobalt représente en masse de 0,1 % à 20 % de la masse totale du catalyseur, sans que ces valeurs limites soient absolues. Cependant, des teneurs trop faibles diluent inutilement l'agent actif du catalyseur tandis que des teneurs trop importantes risquent de provoquer à long terme une dissolution partielle du cobalt, lors de la mise en oeuvre du catalyseur.

Outre le cobalt, les catalyseurs hétérogènes utilisés peuvent également contenir un ou plusieurs éléments susceptibles de promouvoir l'activité du cobalt par un effet de synergie. Selon une variante de l'invention, sont co-déposés sur le support minéral, le cobalt et un élément des groupes 4a, 5a, des métaux de transition de la classification périodique des éléments. De tels éléments pouvant être déposés avec le cobalt sont par exemple, le bismuth, le cuivre, le manganèse, le chrome, le molybdène, le vanadium. L'effet de synergie observé peut apporter jusqu'à 20 % de gain sur l'activité du cobalt seul alors qu'individuellement ces éléments s'avèrent faiblement actifs voire inertes dans les mêmes conditions d'ozonation.

Le catalyseur hétérogène est préparé selon les techniques connues, que l'homme du métier est à même d'adapter, en fonction de la quantité de cobalt ainsi qu'éventuellement de la nature et des quantités des autres éléments à incorporer dans la matrice minérale du support. L'ensemble des modes de préparation se divise en deux catégories générales: la coprécipitation et l'imprégnation. D'une manière générale, les composés des différents éléments entrant dans la composition du catalyseur, c'est-à-dire une source de cobalt, pour le support, une source de silicium, d'étain, d'aluminium, de zinc, de cuivre, de nickel, de fer, de manganèse, de chrome, de molybdène, de vanadium, de titane, de zirconium, de cerium, de magnésium, de calcium, de strontium, de baryum, éventuellement une source d'ions sulfates ou phosphates et des autres éléments à incorporer, sont mélangés dans les proportions souhaitées, ainsi qu'un agent structurant et un agent mobilisateur. La coprécipitation s'applique à partir des composés précurseurs des différents éléments solubles en présence de l'agent structurant et auxquels est ajouté un agent précipitant. L'imprégnation décrit le dépôt de l'élément actif dissous en présence de l'agent structurant sur le matériau support insoluble éventuellement déjà mis en forme, par précipitation sous l'effet de l'agent mobilisateur. L'agent structurant est à titre d'exemple une amine ou un sel d'ammonium quaternaire. L'agent mobilisateur peut notamment être un hydroxyde, un fluorure ou une amine. Le mélange obtenu suivant les deux techniques est alors soumis à un traitement hydrothermique entre 100°C et 300°C ou à un mûrissement à moins de 100°C. Le matériau solide résultant est séparé de la phase liquide selon les techniques classiques de séparation solide/liquide, de préférence par filtration, puis est lavé, de préférence à l'eau. Le matériau obtenu subi un séchage réalisé de préférence à une température de 100°C et sous pression atmosphérique. Enfin, il est calciné à l'air, à une température comprise entre 300°C et 800°C, de préférence entre 400 et 600°C.

Le catalyseur final peut être utilisé sous toutes les formes solides issues des techniques de mise en forme connues ou correspondant à la morphologie du matériau support préexistant: poudre constituée de micrograins, billes, pastilles, extrudés, particules concassées. Ces techniques permettent une mise en forme du catalyseur à l'état divisé ou selon une structure monolithique telle que garnissage de colonnes, membranes tubulaires ou planes.

La quantité de catalyseur employée peut être extrêmement variable en fonction des conditions de réalisation du procédé en mode continu, semi-continu ou discontinu. L'oxydation est préférentiellement effectuée en phase aqueuse bien que l'utilisation d'un solvant organique soit envisageable à des fins particulières du type valorisation d'un produit de réaction à partir d'effluents spécifiques. Le gaz ozoné employé peut être un mélange d'ozone et d'oxygène, ou un mélange d'ozone et d'air ou un mélange d'ozone et d'un gaz vecteur inerte. La température à laquelle est réalisée la réaction d'ozonation catalytique est variable selon la température de l'eau à traiter. Elle est généralement inférieure à 100°C. La pression peut être égale ou supérieure à la pression atmosphérique. A titre indicatif, elle se situe généralement entre $10^5$ et $5.10^5$ Pa. La réactivité du système oxydant ozone/catalyseur ne nécessite pas un ajustement de pH. Ainsi, l'ozonation catalytique peut être appliquée à l'eau à traiter à son pH naturel.

Le traitement d'ozonation catalytique selon l'invention peut être mis en oeuvre en utilisant les réacteurs connus en matière de mise en contact gaz/liquide/solide. La catalyse hétérogène se prête particulièrement bien à un fonctionnement continu ou semi-continu du procédé. Dans ce cas, le catalyseur peut être disposé dans le réacteur d'ozonation en lit fixe unique ou multiple, en lit mobile, en lit fluidisé, en lit bouillonnant. Le gaz ozoné est introduit dans le réacteur contenant l'eau à traiter par les différents moyens connus de diffusion du gaz. Si nécessaire, au cours de l'exploitation du procédé, le catalyseur peut être déchargé, régénéré et recyclé.

On a donné ci-après, afin d'illustrer l'invention et certains modes de mise en oeuvre de celle-ci, quelques exemples concernant d'une part la préparation du catalyseur et d'autre part, le traitement d'effluents selon le procédé catalytique objet de cette invention. Il demeure bien entendu que ces exemples ne présentent aucun caractère limitatif.

Exemple 1 : Préparation du catalyseur par imprégnation.

Une solution de 10,2 g de sulfate de cobalt ($CoSO_4$, 7 $H_2O$) dans 200 ml d'eau est ajoutée-à 100 g de silice. A la solution résultante est additionnée graduellement sous agitation 200 ml d'une solution aqueuse ammoniacale concentrée (28 %) pour atteindre un pH environ égal à 11.

Le mélange réactionnel est laissé sous agitation vigoureuse à température ambiante pendant 4 h. Le solide est récupéré par filtration, lavé à l'eau, puis séché sous air à 100°C et enfin calciné jusqu'à une température de 400°C pendant 1 h.

On obtient ainsi un catalyseur à 2 % de Co supporté sur silice.

Exemple 2 : Préparation du catalyseur par coprécipitation.

Une solution de 10,2 g de sulfate de cobalt ($CoSO_4$, 7 $H_2O$) dans 200 ml d'eau est ajoutée sous agitation à un mélange de 116 ml de tétrachlorure de titane et 298 ml de tétraéthoxysilane dilués dans 700 ml d'éthanol. Au gel ainsi formé, est additionnée graduellement sous agitation 1,3 l d'une solution aqueuse ammoniacale diluée (6 %) pour atteindre un pH environ égal à 11.

Le mélange réactionnel est laissé sous agitation rigoureuse à température ambiante pendant 4 h puis chauffé à 100°C pendant 5 h. Le solide résultant est récupéré par filtration, lavé à l'eau, puis séché sous air à 100°C et enfin calciné jusqu'à une température de 400°C pendant 1 h.

On obtient ainsi un catalyseur à 2 % de Co sur support mixte $SiO_2$-$TiO_2$.

Exemple 3 : Traitement de composés organiques modèles.

Des solutions aqueuses de différents composés modèles sont traitées par ozonation en réacteur à bulles. Le Carbone Organique Total initial des solutions est équivalent et égal à 200 mgC/l excepté dans le cas de l'acide p-chlorobenzoïque pour lequel il est limité à 30 mgC/l par la solubilité du composé.

Les expérimentations suivantes ont été réalisées :

a) un traitement d'ozonation hors activation,
b) un traitement suivant l'invention en présence de 7 g/l de cobalt mis en suspension sous forme de catalyseur hétérogène $Co/SiO_2$ à 11 % de cobalt en masse.

A dose d'ozone égale et adaptée à la nature des composés, les deux traitements conduisent aux résultats figurant dans le tableau 2 ci-après :

Tableau 2

| Taux d'abattement en COT (ΔCOT) ou en DCO(ΔDCO) en fonction du sytème oxydant | ΔCOT % | | ΔDCO % | |
|---|---|---|---|---|
| | $O_3$ | $O_3$ + $Co/SiO_2$ | $O_3$ | $O_3$ $Co/SiO_2$ |
| Acide hexanoïque | 0 | 96 | 0 | 95 |
| Hexanol | 0 | 74 | 11 | 82 |
| Methylisobutylcétone | 0 | 55 | 0 | 59 |
| Glycine | 93 | 98 | 90 | 100 |
| Mercapto-éthanol | 12 | 78 | 45 | 89 |
| Acide p-chlorobenzoïque | 40 | 100 | | |

L'ensemble des résultats obtenus montre que le catalyseur permet d'atteindre des taux de minéralisation, ou taux d'abattement en COT et par voie de conséquence en DCO, élevés alors que les performances de l'ozonation hors catalyseur dans les mêmes conditions, sont limitées. Le taux de minéralisation peut être supérieur à 95 % dans le cas de l'ozonation catalytique et ceci même à partir de composés montrés inertes dans l'ozonation en l'absence de catalyseur.

Exemple 4 : Traitement d'un lixiviat de décharge d'ordures ménagères.

Les essais ont été conduits à partir d'un lixiviat biologiquement prétraité dans un bioréacteur à membranes et présentant entrée ozonation, les caractéristiques suivantes :

pH : 7,5
COT : 200 mg/l
DCO : 540 mg/l
NTK : 26 mg/l
TAC : 78°F

Trois types d'ozonation ont été réalisés en colonne à bulles dans les mêmes conditions de temps de contact et d'injection continu du gaz ozoné :

a) ozonation sans activation
b) ozonation avec addition séquentielle de peroxyde d'hydrogène suivant le rapport massique $H_2O_2/O_3$ égal à 0,3 g/g, à pH régulé à 7,5
c) ozonation en présence de 7 g/l de cobalt mis en suspension sous forme de catalyseur $Co/SiO_2$ à 11 % de cobalt en masse.

Les résultats obtenus sont donnés dans le tableau 3 ci-après :

Tableau 3

| Dose d'ozone | | Système oxydant | ΔCOT % | COT final mg/l | ΔDCO % | DCO finale mg/l |
|---|---|---|---|---|---|---|
| g $O_3$/g COT | g $O_3$/g DCO | | | | | |
| 2,6 | 0,9 | $O_3$ | 32 | 136 | 41 | 319 |
| 2,6 | 0,9 | $O_3 + H_2O_2$ | 32 | 136 | 42 | 313 |
| 2,6 | 0,9 | $O_3 + Co/SiO_2$ | 64 | 72 | 71 | 157 |
| 5,2 | 1,8 | $O_3$ | 62 | 76 | 66 | 184 |
| 5,2 | 1,8 | $O_3 + H_2O_2$ | 66 | 68 | 77 | 124 |
| 5,2 | 1,8 | $O_3 + Co/SiO_2$ | 77 | 46 | 80 | 108 |

Ce tableau 3 permet de constater que pour la même dose d'ozone, l'ozonation catalytique produit une augmentation substantielle des taux d'abattement en COT et DCO par rapport aux traitements par l'ozone hors activation ou avec addition de peroxyde d'hydrogène.

Pour cet effluent, les normes de rejet requièrent une valeur de DCO finale inférieure ou égale à 150 mg/l atteinte pour un taux d'abattement minimum du COT de 70 %. Selon le suivi cinétique des différents traitements d'ozonation appliqués, cette valeur réglementaire est atteinte pour des doses d'ozone variables selon le traitement d'ozonation. Il apparaît que l'ozonation catalytique conduit à une réduction conséquente de la dose d'ozone nécessaire pour le respect de la réglementation. Le gain occasionné en terme de quantité globale d'oxydant nécessaire pour le même abattement du COT, atteint 55 % par rapport à l'ozonation avec addition de peroxyde d'hydrogène et 48 % par rapport à l'ozonation hors activation.

Exemple 5 : Traitement d'un effluent agro-alimentaire

Cet effluent prétraité biologiquement par méthanisation suivie d'un traitement aérobie avec nitrification/dénitrification a été ozoné en continu dans un contacteur à bulles jusqu'à l'obtention d'un taux de décoloration de 90 %.
Les caractéristiques de l'effluent entrée ozonation sont mentionnées ci-après :

pH :  7,9
COT :  932 mg/l
DCO :  2540 mg/l
Couleur :  6630° Hazen
NTK :  183 mg/l

Deux essais ont été conduits dans les mêmes conditions de temps de contact et d'injection du gaz ozoné:
a) ozonation hors activation
b) ozonation en présence de 3 g/l de cobalt sous forme du catalyseur hétérogène à 4 % de cobalt en masse disposé en lit fixe.
Les doses d'ozone nécessaires exprimées en mg d'ozone par l d'effluent figurent dans le tableau 4 ci-après :

Tableau 4

| Décoloration % | Système oxydant | Dose d'ozone mg $O_3$/l | ΔCOT % | ΔDCO % | ΔNTK % |
|---|---|---|---|---|---|
| 90 | $O_3$ | 2100 | 32 | 49 | 24 |
| 90 | $O_3 + Co/SiO_2$ | 950 | 34 | 52 | 40 |

Selon ces valeurs, la décoloration de 90 % est réalisée pour une dose d'ozone de 950 mg/l en ozonation catalytique contre 2100 mg/l en ozonation hors catalyseur. Moyennant une dose d'ozone réduite de 55 %, l'ozonation catalytique conduit à des taux d'abattement en COT, DCO et NTK similaires ou supérieurs à ceux résultant de l'ozonation hors activation. Par ailleurs, l'analyse du catalyseur après réaction montre que la matière organique retenue représente moins de 1 % de la masse de catalyseur finale, excluant ainsi un phénomène de dépollution par adsorption.

Exemple 6 : Traitement d'un effluent de synthèse organique.

L'effluent objet de cet exemple est caractérisé par une forte pollution organique non biodégradable. Après traitement par oxydation en voie humide, l'effluent est caractérisé comme suit :

| | |
|---|---|
| pH : | 10,3 |
| COT : | 1540 mg/l |
| DCO : | 6600 mg/l |
| NTK : | 2420 mg/l |
| $N\text{-}NH_4^+$ : | 1540 mg/l |
| TA : | 370°F |
| TAC : | 660°F |

L'effluent est ozoné dans les mêmes conditions de temps de contact et d'injection continue du gaz ozoné dans un contacteur à bulles par :

a) ozonation avec addition de peroxyde d'hydrogène à la dose de 0,5 g/g d'ozone à pH régulé à 7,5
b) ozonation en présence de 7 g/l de cobalt sous forme de catalyseur hétérogène $Co/SiO_2$ en suspension

Les résultats obtenus sont consignés dans le tableau 5 ci-après :

Tableau 5

| Dose d'ozone | | Système oxydant | $\Delta$COT % | $\Delta$DCO % | $\Delta$NTK % | $\Delta N\text{-}NH_4^+$ % |
|---|---|---|---|---|---|---|
| g $O_3$/g COT | g $O_3$/g DCO | | | | | |
| 8,4 | 2 | $O_3 + H_2O_2$ | 16 | 9 | 6 | 3 |
| 8,4 | 2 | $O_3 + Co/SiO_2$ | 52 | 53 | 83 | 89 |

De l'utilisation du catalyseur par rapport à l'ajout de peroxyde d'hydrogène, résulte une augmentation importante des taux d'abattement du COT, de la DCO, du NTK et de l'azote ammoniacal à dose d'ozone constante. Le couple oxydant ozone/catalyseur provoque à la fois la minéralisation du carbone et de l'azote organique sans subir l'inhibition mise en évidence pour le système ozone/peroxyde d'hydrogène liée à la forte alcalinité de l'effluent.
Il demeure bien entendu que la présente invention n'est pas limitée aux exemples de mise en oeuvre décrits ici mais qu'elle en englobe toutes les variantes qui entrent dans le cadre des revendications ci-après.

## Revendications

1.  Procédé d'ozonation catalytique par l'ozone moléculaire ou par un gaz contenant de l'ozone, pour l'épuration d'eaux polluées, qui consiste à activer l'ozone par un catalyseur sous forme solide constitué au moins d'atomes de cobalt, déposés sur un support, **caractérisé en ce qu'**on dispose le catalyseur solide dans un réacteur d'ozonation contenant l'eau à traiter, le gaz ozoné étant introduit dans ce réacteur, avec mise en contact gaz/liquide/solide, le catalyseur étant introduit dans le milieu d'ozonation sous une forme insoluble correspondant à une catalyse hétérogène, **en ce que** le cobalt qu'il contient renferme en masse de 0,1 % à 20 % de la masse totale du catalyseur, et **en ce que** le support utilisé présente une surface spécifique de 10 m$^2$/g à 700 m$^2$/g pour un volume poreux de 0,1 ml/g à 1,3 ml/g.

2.  Procédé selon la revendication 1, **caractérisé en ce que** ledit catalyseur hétérogène au cobalt se présente sous la forme d'oxydes insolubles purs ou en mélanges.

3.  Procédé selon l'une des revendications 1 ou 2, **caractérisé en ce que** ledit catalyseur hétérogène au cobalt est déposé sur un matériau support.

4.  Procédé selon la revendication 3, **caractérisé en ce que** ledit matériau support est choisi dans le groupe comprenant un oxyde des éléments silicium, étain, aluminium, zinc, cuivre, nickel fer, manganèse, chrome, molybdène, vanadium , titane, zirconium, cerium, magnésium, strontium, baryum, pur ou en mélange, contenant éventuellement des groupements phosphates ou sulfates.

5. Procédé selon la revendication 3, **caractérisé en ce que** le catalyseur constitué de cobalt est déposé sur un support minéral à propriété acide ou redox.

6. Procédé selon la revendication 5, **caractérisé en ce que** ledit support minéral est choisi dans le groupe qui comprend l'alumine, la zircone, le dioxyde d'étain, l'oxyde de fer, purs ou en mélanges et de préférence, la silice, le dioxyde de titane et le dioxyde de zirconium.

7. Procédé selon l'une quelconque des revendications 1 à 6, **caractérisé en ce que** le catalyseur hétérogène contient un ou plusieurs éléments susceptibles de promouvoir l'activité du cobalt par un effet de synergie.

8. Procédé selon la revendication 7, **caractérisé en ce que** ledit catalyseur hétérogène contient un ou plusieurs autres éléments choisis parmi les éléments des groupes 4a, 5a, des métaux de transition de la classification périodique des éléments.

9. Procédé selon la revendication 8, **caractérisé en ce que** lesdits éléments sont le bismuth, le cuivre, le manganèse, le chrome, le molybdène, le vanadium.

10. Procédé selon l'une quelconque des revendications 1 à 9, **caractérisé en ce que** ledit catalyseur hétérogène est mis en oeuvre à l'état divisé sous toute forme solide connue.

11. Procédé selon l'une quelconque des revendications 1 à 9, **caractérisé en ce que** ledit catalyseur hétérogène est mis en oeuvre selon une structure monolithique telle que notamment garnissage de colonnes, membranes tubulaires ou planes.

12. Procédé selon l'une des revendications précédentes **caractérisé en ce que** l'on réalise la réaction d'ozonation catalytique à une température inférieure ou égale à 100°C et à une pression inférieure ou égale à $5.10^5$ Pa.

**Claims**

1. A process for catalytic ozonization by molecular ozone or by a gas containing ozone, for the purification of polluted water, which consists of activating the ozone by a solid-form catalyst constituted at least by cobalt atoms deposited on a support, **characterized in that** the solid catalyst is deposited into an ozonization reactor containing the water to be treated, whereby the ozonized gas is introduced into this reactor, brought into contact with the gas/liquid/solid, whereby the catalyst is introduced into the ozonization medium in an insoluble form corresponding to a heterogeneous catalysis, **in that** the cobalt contained therein holds, by weight, 0.1% to 20% of the total weight of the catalyst and **in that** the support used has a specific surface area of 10 $m^2$/g to 700 $m^2$/g for a pore volume of 0.1 ml/g to 1.3 ml/g.

2. The process according to claim 1, **characterized in that** said heterogeneous cobalt catalyst is in the form of pure or mixed insoluble oxides.

3. The process according to one of claim 1 or 2, **characterized in that** said heterogeneous cobalt catalyst is deposited on a support material.

4. The process according to claim 3, **characterized in that** said support material is selected from the group comprising an oxide of the elements silicon, tin, aluminium, zinc, copper, nickel, iron, manganese, chromium, molybdenum, vanadium, titanium, zirconium, cerium, magnesium, strontium, barium, pure or mixed, optionally containing phosphate or sulfate groups.

5. The process according to claim 3, **characterized in that** the cobalt catalyst is deposited on a mineral support having redox or acid properties.

6. The process according to claim 5, **characterized in that** said mineral support is selected from the group comprising alumina, zirconia, tin dioxide, iron oxide, pure or mixed and preferably, silica, titanium dioxide and zirconium dioxide.

**7.** The process according to any one of claims 1 to 6, **characterized in that** the heterogeneous catalyst contains one or more elements able to promote the activity of the cobalt by a synergy effect.

**8.** The process according to claim 7, **characterized in that** said heterogeneous catalyst contains one or more other elements selected from elements of groups 4a, 5a of the transition metals in the periodic classification of elements.

**9.** The process according to claim 8, **characterized in that** said elements are bismuth, copper, manganese, chromium, molybdenum, vanadium.

**10.** The process according to any one of claims 1 to 9, **characterized in that** said heterogeneous catalyst is implemented in the divided state in any known solid form.

**11.** The process according to any one of claims 1 to 9, **characterized in that** said heterogeneous catalyst is implemented according to a monolithic structure, such as in particular the lining of columns, tubular or planar membranes.

**12.** The process according to any one of the preceding claims, **characterized in that** said catalytic ozonization reaction is performed at a temperature below or equal to 100°C and at a pressure below or equal to $5.10^5$ Pa.

**Patentansprüche**

**1.** Verfahren zur katalytischen Ozonisierung mittels molekularem Ozon oder mittels eines ozonhaltigen Gases, für die Reinigung von verunreinigtem Wasser, das darin besteht, das Ozon durch einen Katalysator in fester Form, der wenigstens aus auf einem Träger abgeschiedenen Kobaltatomen besteht, zu aktivieren, **dadurch gekennzeichnet, dass** der feste Katalysator in einem Ozonisierungsreaktor, der das zu behandelnde Wasser enthält, angeordnet wird, wobei das ozonhaltige Gas unter Gas-Flüssigkeit-Feststoff-Kontaktierung in diesen Reaktor eingeleitet wird, wobei der Katalysator in das Ozonisierungsmedium in einer unlöslichen Form eingebracht wird, was einer heterogenen Katalyse entspricht, dass das Kobalt, das er enthält, 0,1 bis 20 Masseprozent der Gesamtmasse des Katalysators ausmacht, und dass der verwendete Träger eine spezifische Oberfläche von 10 $m^2$/g bis 700 $m^2$/g bei einem Porenvolumen von 0,1 ml/g bis 1,3 ml/g aufweist.

**2.** Verfahren nach Anspruch 1, **dadurch gekennzeichnet, dass** der heterogene Kobalt-Katalysator in Form von reinen oder gemischten unlöslichen Oxiden vorliegt.

**3.** Verfahren nach einem der Ansprüche 1 oder 2, **dadurch gekennzeichnet, dass** der heterogene Kobalt-Katalysator auf einem Trägermaterial abgeschieden ist.

**4.** Verfahren nach Anspruch 3, **dadurch gekennzeichnet, dass** das Trägermaterial aus der Gruppe umfassend ein Oxid der Elemente Silizium, Zinn, Aluminium, Zink, Kupfer, Nickel, Eisen, Mangan, Chrom, Molybdän, Vanadium, Titan, Zirkonium, Cer, Magnesium, Strontium, Barium, rein oder gemischt, eventuell enthaltend Phosphat- oder Sulfat-Gruppen, ausgewählt ist.

**5.** Verfahren nach Anspruch 3, **dadurch gekennzeichnet, dass** der von Kobalt gebildete Katalysator auf einem mineralischen Träger mit saurer oder Redox-Eigenschaft abgeschieden ist.

**6.** Verfahren nach Anspruch 5, **dadurch gekennzeichnet, dass** der mineralische Träger aus der Gruppe umfassend Aluminiumoxid, Zirkonoxid, Zinndioxid, Eisenoxid, rein oder gemischt, und vorzugsweise Siliziumdioxid, Titandioxid und Zirkoniumdioxid ausgewählt ist.

**7.** Verfahren nach einem der Ansprüche 1 bis 6, **dadurch gekennzeichnet, dass** der heterogene Katalysator ein oder mehrere Elemente umfasst, die geeignet sind, die Aktivität des Kobalts durch einen Synergieeffekt zu fördern.

**8.** Verfahren nach Anspruch 7, **dadurch gekennzeichnet, dass** der heterogene Katalysator ein oder mehrere weitere Elemente enthält, die aus den Elementen der Gruppen 4a, 5a, der Übergangsmetalle des Periodensystems ausgewählt sind.

**9.** Verfahren nach Anspruch 8, **dadurch gekennzeichnet, dass** die Elemente Wismut, Kupfer, Mangan, Chrom, Molybdän, Vanadium sind.

**10.** Verfahren nach einem der Ansprüche 1 bis 9, **dadurch gekennzeichnet, dass** der heterogene Katalysator in geteiltem Zustand in jedweder bekannten festen Form verwendet wird.

**11.** Verfahren nach einem der Ansprüche 1 bis 9, **dadurch gekennzeichnet, dass** der heterogene Katalysator in einer monolithischen Struktur, wie insbesondere Packung von Kolonnen, Rohr- oder Flachmembranen verwendet wird.

**12.** Verfahren nach einem der vorstehenden Ansprüche, **dadurch gekennzeichnet, dass** die katalytische Ozonisierungsreaktion bei einer Temperatur von unter oder gleich 100 °C und unter einem Druck von weniger als oder gleich $5.10^5$ Pa durchgeführt wird.

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 9613463 A
- US 5145587 A
- GB 1417573 A
- FR 2738235 A
- US 5637231 A
- US 5178755 A
- US 3924139 A
- FR 2640957 A
- FR 2563208 A
- FR 2699914 A
- US 4792407 A

- US 4849114 A
- GB 2269167 A
- WO 9014312 A
- EP 0625482 A
- EP 0436409 A
- WO 9714657 A
- FR 2291687 A
- US 4040982 A
- US 4007118 A
- EP 0361385 A
- WO 9708101 A